# EUROPEAN PATENT APPLICATION

(11) **EP 2 487 348 A2**
(43) Date of publication of application: **15.08.2012**
(21) Application number: 12154943.0
(22) Date of filing: 10.02.2012
(51) Int. Cl.: F02C 3/20

(54) **System and method for producing a hydrogen enriched fuel**

(30) Priority: 14.02.2011 US 201113026385
(71) Applicant: General Electric Company, Schenectady, New York 12345 (US)
(72) Inventor: Draper, Samuel David, Greenville, SC South Carolina 29615 (US); Smith, Raub Warfield, Schenectady, NY New York 12345 (US); Simpson, Stanley Frank, Greenville, SC South Carolina 29615 (US); Hadley, Mark Allen, Greenville, SC South Carolina 29615 (US); Toprani, Amit Surendra, Greenville, SC South Carolina 29615 (US)
(74) Representative: Cleary, Fidelma

(57) **Abstract**

A system for producing a hydrogen enriched fuel (50) includes a gas turbine (20) comprising a compressor (16), a combustor (18), and a turbine (20). A fuel reformer (54) is connected between the compressor (16) and the combustor (18). The fuel reformer (54) comprises an inlet (60) connected to the compressor (16) and an outlet (62) connected to the combustor (18), and the fuel reformer (54) produces the hydrogen enriched fuel (52). A method for producing a hydrogen enriched fuel (52) includes compressing a working fluid (24) with a compressor (16) to produce a compressed working fluid (24) and diverting a first portion of the compressed working fluid (64) to a fuel reformer (54). The method further includes mixing a fuel (26) with the compressed working fluid (24) in the fuel reformer (54) to produce the hydrogen enriched fuel (52) and an exhaust stream (66) and flowing the exhaust stream (66) to a combustor(18).

## Description

### FIELD OF THE INVENTION

The present invention relates generally to a system and method for producing a hydrogen enriched fuel for subsequent combustion or distribution. In particular embodiments of the present invention, a fuel reformer is integrated with a gas turbine to enhance the overall efficiency of the integrated system.

### BACKGROUND OF THE INVENTION

Gas turbines are widely used in industrial and power generation operations. Various reformers may be used to produce hydrogen enriched fuel for the gas turbine or other uses. For example, a catalytic partial oxidation (CPOX) or steam methane reformer (SMR) may combine steam, a catalyst such as nickel or a precious metal, and fuel such as natural gas or methane to produce hydrogen. The fuel reformer may be integrated with the gas turbine to produce an integrated system having an enhanced overall efficiency. Specifically, U.S. Patent 7,076,957, assigned to the same assignee as the present invention, describes a fluid heating and gas turbine integration method in which the gas turbine supplies exhaust gases to the fuel reformer to enhance the thermodynamic efficiency of the combined gas turbine and fuel reformer.

Although supplying the gas turbine exhaust to the fuel reformer improves the thermodynamic efficiency of the combined gas turbine and fuel reformer, continued improvements in the design and integration of a fuel reformer with a gas turbine would be useful. Specifically, the fuel reformer produces a high temperature exhaust stream having substantial amounts of energy, and an integrated system that can capture or utilize more of the energy from the high temperature exhaust stream from the fuel reformer may further enhance the thermodynamic efficiency of the combined gas turbine and fuel reformer.

### BRIEF DESCRIPTION OF THE INVENTION

Aspects and advantages of the invention are set forth below in the following description, or may be obvious from the description, or may be learned through practice of the invention.

The present invention resides in a system for producing a hydrogen enriched fuel. The system includes a gas turbine comprising a compressor, a combustor connected downstream of the compressor, and a turbine connected downstream of the combustor. A fuel reformer is connected between the compressor and the combustor. The fuel reformer comprises an inlet connected to the compressor and an outlet connected to the combustor, and the fuel reformer produces the hydrogen enriched fuel.

The present invention also resides in the gas turbine of the system described above.

The present invention also resides in a method for producing a hydrogen enriched fuel. The method includes compressing a working fluid with a compressor to produce a compressed working fluid and diverting a first portion of the compressed working fluid to a fuel reformer. The method further includes mixing a fuel with the compressed working fluid in the fuel reformer to produce the hydrogen enriched fuel and an exhaust stream and flowing the exhaust stream to a combustor.

Those of ordinary skill in the art will better appreciate the features and aspects of such embodiments, and others, upon review of the specification.

### BRIEF DESCRIPTION OF THE DRAWINGS

Embodiments of the present invention will now be described, by way of example only, with reference to the accompanying drawings in which:
Fig. 1 is a simplified block diagram of a combined cycle power plant; and
Fig. 2 is a simplified block diagram of a system for producing a hydrogen enriched fuel according to one embodiment of the present invention.

### DETAILED DESCRIPTION OF THE INVENTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention.

Each example is provided by way of explanation of the invention, not limitation of the invention. In fact, it will be apparent to those skilled in the art that modifications and variations can be made in the present invention without departing from the scope or spirit thereof. For instance, features illustrated or described as part of one embodiment may be used on another embodiment to yield a still further embodiment. Thus, it is intended that the present invention covers such modifications and variations as come within the scope of the appended claims and their equivalents.

Various embodiments of the present invention integrate a fuel reformer with a gas turbine to produce an integrated thermodynamic cycle with enhanced overall efficiency. In specific embodiments, the fuel reformer may receive a compressed working fluid and/or steam from the gas turbine to generate a hydrogen enriched fuel. The hydrogen enriched fuel may then be supplied to the gas turbine, recirculated back to the reformer, and/or collected for other uses. In addition, the fuel reformer may be integrated with the gas turbine to provide a high temperature exhaust stream to the gas turbine, specifically to one or more combustors in the gas turbine, to more efficiently capture or utilize energy produced by the fuel reformer.

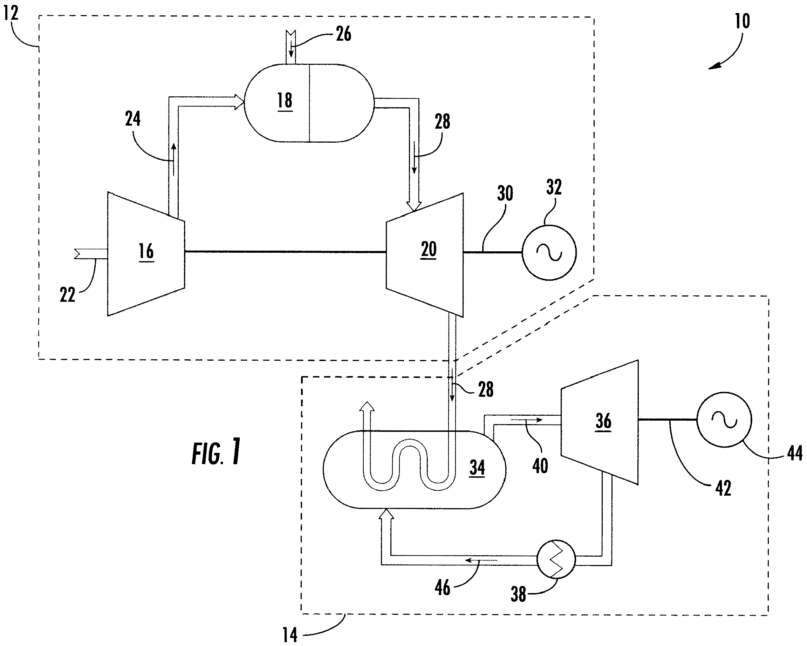

Fig. 1 shows a simplified block diagram of a conventional combined cycle power plant 10 as is known in the art. As shown, the combined cycle power plant 10 generally includes a gas turbine 12 integrated with a heat recovery system 14. The gas turbine 12 generally comprises a compressor 16, one or more combustors 18 connected downstream of the compressor 16, and a turbine 20 connected downstream of the combustor(s) 18. As used herein, the terms "upstream" and "downstream" refer to the relative location of components in a fluid pathway. For example, component A is upstream of component B if a fluid flows from component A to component B.

Conversely, component B is downstream of component A if component B receives a fluid flow from component A.

Ambient air 22 enters the compressor 16, and stationary vanes and rotating blades in the compressor 16 progressively impart kinetic energy to the working fluid (air) to produce a compressed working fluid 24 at a highly energized state. The compressed working fluid 24 exits the compressor 16 and flows through nozzles in the combustor(s) 18 where it mixes with a fuel 26 and ignites to generate combustion gases 28 having a high temperature and pressure. The combustion gases 28 flow to the turbine 20 where they expand to produce work. For example, expansion of the combustion gases 28 in the turbine 20 may rotate a shaft 30 connected to a generator 32 to produce electricity.

The combustion gases 28 exit the turbine 20, and, if released immediately to the environment, would result in wasted energy generated by the gas turbine 12 that does not produce work. Therefore, the heat recovery system 14 connected downstream of the turbine 20 receives the combustion gases 28 from the turbine 20 to extract additional energy from the combustion gases 28. Specifically, the heat recovery system 14 generally comprises a steam generator 34, a steam turbine 36, and a condenser 38. The steam generator 34 receives the combustion gases 28 from the turbine 20 to heat water to generate steam 40. The steam 40 then flows through the steam turbine 36 where it expands to produce work. For example, expansion of the steam 40 in the steam turbine 36 may rotate a shaft 42 connected to a generator 44 to produce electricity. The shaft 42 and generator 44 may be the same shaft 30 and generator 32 connected to the gas turbine 12, or the gas turbine 12 and heat recovery system 14 may operate using separate shafts and generators. The condenser 38 downstream of the steam turbine 36 condenses the steam 40 to condensate 46, and the condensate 46 returns to the steam generator 34, and the cycle repeats. The heat recovery system 14 thus captures energy from the combustion gases 28 before they are eventually released to the environment, thus increasing the overall efficiency of the combined cycle power plant 10.

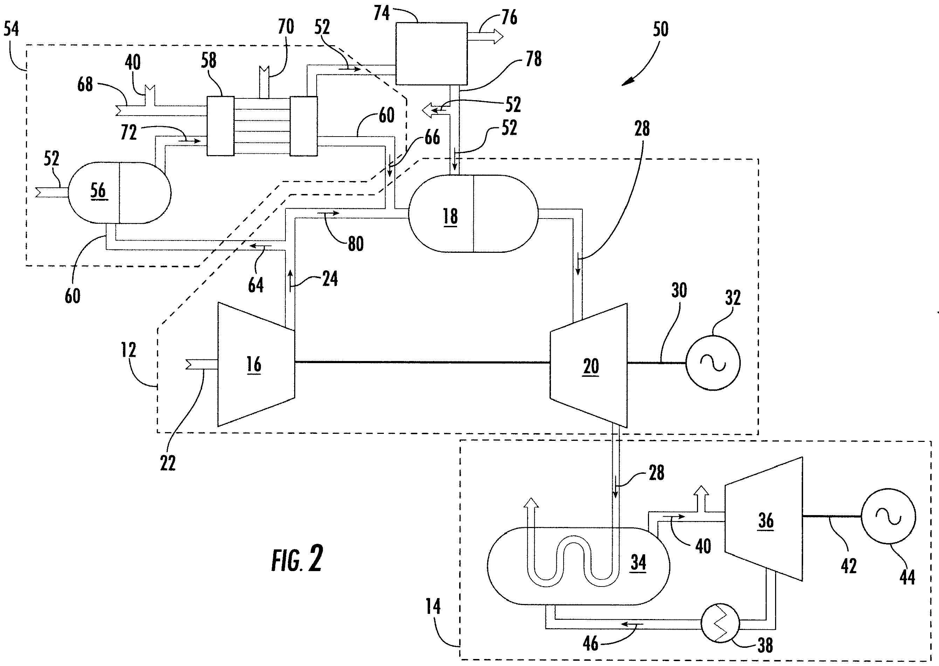

Fig. 2 provides a simplified block diagram of a system 50 for producing a hydrogen enriched fuel 52 according to one embodiment of the present invention. As shown, the system 50 may comprise a fuel reformer 54 integrated with the combined cycle power plant 10 shown in Fig. 1. The fuel reformer 54 may comprise any device known to one of ordinary skill in the art for oxidizing fuel to produce a reformed fuel having increased levels of hydrogen. For example, the fuel reformer 54 may comprise a combustor 56 or other heat source in combination with a catalytic partial oxidation (CPOX) converter that uses one or more precious metals as a catalyst or a steam methane reformer (SMR) 58 that uses a metal, such as nickel, as the catalyst. The fuel reformer 54 may be connected downstream of the compressor 16 between the compressor 16 and the combustor 18. For example, an inlet 60 of the fuel reformer 54 may be connected to the compressor 16, and an outlet 62 of the fuel reformer 54 may be connected to the combustor 18. In this manner, the fuel reformer 54 may receive a first portion of the compressed working fluid 64 from the compressor 16, and the combustor 18 may receive an exhaust stream 66 from the fuel reformer 54 for use in producing the combustion gases 28. In addition, the fuel reformer 54 may be connected to the steam generator 34 to receive the steam 40 produced by the steam generator 34.

As shown in Fig. 2, the fuel reformer 54 combines a fuel 68, a catalyst 70, and steam 40, for example from the steam generator 34, with heat 72 from the reformer combustor 56 to produce the hydrogen enriched fuel 52. Possible fuels 68 supplied to the fuel reformer 54 include, for example, blast furnace gas, coke oven gas, natural gas, methane, vaporized liquefied natural gas (LNG), and propane. The hydrogen enriched fuel 52 from the fuel reformer 54 may flow to a separator 74 downstream of the fuel reformer 54. The hydrogen enriched fuel 52 may comprise a mixture of hydrogen and various off gases, such as unconverted fuel, carbon monoxide, and carbon dioxide. The separator 74 may comprise, for example, a pressure swing absorption (PSA), chemical absorption, and/or membrane separator to selectively isolate the hydrogen from the other off gases. As a result, the separator 74 may provide a first discharge stream 76 of off gases for further treatment and consolidation and a second discharge stream 78 of hydrogen to the combustor 18. In this manner, the hydrogen enriched fuel 52 flows from the fuel reformer 54, through the separator 74 where the off gases are removed, and into the combustor 18. As further shown in Fig. 2, a portion of the hydrogen enriched fuel 52 in the second discharge stream 78 may also be diverted or recirculated back to the reformer combustor 56 to provide fuel for the reformer combustor 56.

As previously described, the exhaust stream 66 from the fuel reformer 54 flows to the combustor 18. In this manner, the system 50 utilizes the energy in the high temperature exhaust stream 66 from the fuel reformer 54 in the combustor 18. As shown in Fig. 2, the combustor 18 may also receive a second portion of the compressed working fluid 80 from the compressor 16 that mixes with the high temperature exhaust stream 66 from the fuel reformer 54 before entering the combustor 18. The second portion of the compressed working fluid 80 may thus cool the high temperature exhaust stream 66 from the fuel reformer 54 prior to entry into the combustor 18 to ensure that design temperatures associated with the combustor 18 are not exceeded.

The system 50 shown in Fig. 2 may thus provide a method for producing the hydrogen enriched fuel 52. Specifically, the method may include compressing the working fluid (e.g., air 22) with the compressor 16 to produce the compressed working fluid 24. The method may further include diverting the first portion of the compressed working fluid 64 and steam 40 from the steam generator 34 to the fuel reformer 54 and mixing the fuel 68 with the compressed working fluid 64 and steam 40 in the fuel reformer 54 to produce the hydrogen enriched fuel 52. The hydrogen enriched fuel 52 may then flow to the separator 74 downstream of the fuel reformer 54 to remove off gases from the hydrogen enriched fuel 52, and a portion of the hydrogen enriched fuel 52 may flow to the combustor 18. In addition, a portion of the hydrogen enriched fuel 52 may be diverted or recirculated back to the reformer combustor 56 to provide fuel for the reformer combustor 56.

The method may further include flowing the exhaust stream 66 to the combustor 18 to efficiently utilize the high temperature exhaust stream 66 to produce the combustion gases 28. If desired, the second portion of the compressed working fluid 80 may also be diverted to the combustor 18 to mix with the high temperature exhaust stream 66 prior to or after entry into the combustor 18. In this manner, the fuel reformer 54 may be integrated with the combined cycle power plant 10 to enhance the overall thermodynamic efficiency of the system 50.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A system for producing a hydrogen enriched fuel (50) comprising:
a. a gas turbine ( 12 ) comprising a compressor (16), a combustor (18) connected downstream of the compressor (16), and a turbine (20) connected downstream of the combustor (18); and
b. a fuel reformer (54) connected between the compressor (16) and the combustor (18), wherein the fuel reformer (54) comprises an inlet (60) connected to the compressor (16) and an outlet (62) connected to the combustor (18), and wherein the fuel reformer (54) produces the hydrogen enriched fuel (52).

2. The system (50) as in claim 1, wherein the fuel reformer (54) comprises a steam methane reformer (58).

3. The system (50) as in claim 1 or 2, wherein the combustor (18) receives at least a portion of the hydrogen enriched fuel (52) from the fuel reformer (54).

4. The system (50) as in any preceding claim, further comprising a separator (74) downstream of the fuel reformer (54), wherein the separator (74) receives the hydrogen enriched fuel (52) from the fuel reformer (54).

5. The system (50) as in claim 4, wherein the fuel reformer (54) receives at least a portion of the hydrogen enriched fuel (52) from the separator(74).

6. The system (50) as in any preceding claim, further comprising a steam generator (34) downstream of the turbine (20), wherein the steam generator (34) produces steam (40).

7. The system (50) as in claim 6, wherein the fuel reformer (54) is connected to the steam generator (34) to receive at least a portion of the steam (40) from the steam generator (34).

8. A method for producing a hydrogen enriched fuel (52), comprising:
a. compressing a working fluid (22) with a compressor (16) to produce a compressed working fluid (24);
b. diverting a first portion of the compressed working fluid (64) to a fuel reformer (54);
c. mixing a fuel (68) with the compressed working fluid (24) in the fuel reformer (54) to produce the hydrogen enriched fuel (52) and an exhaust stream (66); and
d. flowing the exhaust stream (66) to a combustor (18).

9. The method as in claim 8, further comprising diverting a second portion of the compressed working fluid (80) to the combustor (18).

10. The method as in claim 8 or 9, further comprising flowing the hydrogen enriched fuel (52) to a separator (74) downstream of the fuel reformer (54).

11. The method as in any of claims 8 to 10, further comprising flowing a portion of the hydrogen enriched fuel (52) to the combustor (18).

12. The method as in any of claims 8 to 11, further comprising generating steam from a steam generator (34) connected downstream of the combustor (18).

13. The method as in claim 12, further comprising flowing at least a portion of the steam (40) from the steam generator (34) to the fuel reformer (54).
